# EUROPEAN PATENT SPECIFICATION

(11) **EP 2 958 277 B1**
(45) Date of publication and mention of the grant of the patent: **09.05.2018**
(21) Application number: 15175713.5
(22) Date of filing: 02.03.2009
(51) Int. Cl.: H04L 12/58

(54) **INSTANT MESSAGING METHOD AND SYSTEM**
VERFAHREN UND SYSTEM FÜR SOFORTIGE NACHRICHTENÜBERMITTLUNG
SYSTÈME ET PROCÉDÉ DE MESSAGERIE INSTANTANÉE

(30) Priority: 28.02.2008 CN 200810009371
(43) Date of publication of application: 23.12.2015
(62) Divisional of application: 09715081.7
(73) Proprietor: Alibaba Group Holding Limited, Grand Cayman (KY)
(72) Inventor: ZHANG, Jian, 310099 Hangzhou, (CN)
(74) Representative: Grünecker Patent- und Rechtsanwälte PartG mbB

(56) References cited:
- CN-K1- 1 960 345
- US-A1- 2006 168 049
- US-A1- 2008 244 011
- US-B1- 7 295 657
- US-B1- 7 298 831

## Description

### RELATED APPLICATIONS

The present application claims priority benefit of Chinese patent application No. 200810009371.0, filed February 28, 2008, entitled "METHOD AND APPARATUS FOR TRANSMITTING MESSAGES IN INSTANT MESSAGING".

### BACKGROUND

The present disclosure relates to the fields of instant messaging, and particularly to methods and systems for message transmission in instant messaging.

Instant messaging (IM) technology allows one to recognize the online status of other users and exchange information (text messages, files, voice and video, etc.) with the other users in real time on the Internet. Because of such inherent advantages as timeliness, low-cost and high efficiency, instant messaging has become one of the most popular network communication methods.

Generally, instant messaging involves a message exchange process between a terminal or a network platform and an instant messaging server over a network. A typical process of instant messaging, for example, includes a procedure described as follows.

First, user A enters a username and a password to log in an instant messaging server which verifies the user identity by reading a user database. If the username and the password are correct, the server registers the user A's IP address, version number of IM client software and the port number used for TCP/UDP, and then returns a flag indicating a successful login of the user A. The user A's status in the instant messaging system becomes "Online Presence" at that time.

Second, based on a Buddy List saved in the instant messaging server by the user A, the server sends information related to the user A's online status to PCs of the user A's IM buddies who are online (i.e., having an online presence) at that time. The information sent includes the online status, the IP address, and the TCP port number used by the IM client.

Third, the instant messaging server sends the Buddy List of the user A and related information to the user A's PC. The information includes the online statuses of the users in the Buddy List, IP address, and TCP port number used by the IM clients of the users. Upon receiving the information, the IM client of the user A's PC displays the Buddy List and corresponding online status of the users in the Buddy List.

Under this circumstance, if the user A wants to chat with an online buddy user B, the user A may directly send a chat message to the user B's PC using such information as the user B's IP address and TCP port number sent from the server. Upon receiving and displaying the message on a screen by the user B's IM client software, the user B responds directly to the user A's PC. In this manner, the two parties' instant messages are communicated over a network through direct point-to-point communication, or in other words, through peer-to-peer communication. However, if the point-to-point communication between the user A and the user B is difficult to be established or slow in speed due to such reasons as firewall and network speed, the IM server may provide a message relay service, in which instant messages of the user A and the user B are first sent to the IM server, which then relays the messages to corresponding users.

With the development of the instant messaging technologies, often a certain IM account of a message receiving end receives too many messages or too much message data. As such, an individual IM account may become difficult to manage by its owner and may further require excessive system resources to be the assigned to that IM account. In addition to being a management problem, the over-occupancy of system resources may lead to various system issues such as interrupt transmission and system offline.

Therefore, there is an urgent need to provide a message transmission method in instant messaging to optimize allocation of burdens and resources to IM accounts for better user experience.
Document CN 1 960 345 A describes an instant message system wherein a user has multiple accounts. A server establishes a plurality of sub-accounts associated with a primary account of an instant message user. For communication with a receiver, an account which is online and which has been recently contacted by the sender is preferably selected.
Document US 7,298,831 B1 and document US 7,295,657 B1 describe a chat support system for instant messaging, wherein the message is distributed to a back-up messaging account when the intended recipient is unavailable. The chat support system then updates the intended recipient with the message log in such a way that the intended recipient can nevertheless monitor communication between the sender and the back-up recipient. A plurality of criteria are defined, which of a plurality of possible back-up recipients to select, depending on contents of a message, message category, etc.
Document US 2006/168 049 A1 describes a method for re-directing instant messages to an alternative recipient of the message in the event that the initial recipient does not respond to the message within a predetermined time period. An alternative recipient can be selected from a list. The list can be configured by both sender and receiver.

### SUMMARY OF THE DISCLOSURE

The present disclosure provides a message transmission method in instant messaging for more reasonable allocation of burdens and resources to IM accounts in order to improve system efficiency and user experience. The disclosure also provides an instant messaging system that incorporates the disclosed method.
This is achieved by the features of the independent claims.

The method and the system optimize resource allocation by allowing a message to be selectively sent to a target account among the primary account and its associated auxiliary accounts.

### DESCRIPTION OF DRAWINGS

The detailed description is described with reference to the accompanying figures. In the figures, the left-most digit(s) of a reference number identifies the figure in which the reference number first appears. The use of the same reference numbers in different figures indicates similar or identical items.
FIG. 1 shows a flow chart of a first exemplary method for transmitting an instant message in accordance with the present disclosure.
FIG. 2 shows a schematic diagram of a grouping interface of instant messaging accounts.
FIG. 3 shows a flow chart of a second exemplary method for transmitting an instant message in accordance with the present disclosure.
FIG. 4 shows a flow chart of a third exemplary method for transmitting an instant message in accordance with the present disclosure.
FIG. 5 shows a diagram illustrating a first exemplary system for transmitting an instant message in accordance with the present disclosure.
FIG. 6 shows diagram illustrating a second exemplary system for transmitting an instant message in accordance with the present disclosure.
FIG. 7 shows a diagram illustrating a third exemplary system for transmitting an instant message in accordance with the present disclosure.

### DETAILED DESCRIPTION

The method and system disclosed herein can be used in a variety of computer system environments or configurations. Examples of these computing system environments or configurations include personal computers, servers, handhelds or portable devices, tablet devices, multi-processer systems, and distributed computing environment of any systems or devices described above.

The method and system may be embodied within a general context of computer-executable instructions executed by a computer, such as a program module. Generally, a program module includes routines, programs, objects, modules, and data structure, etc., for executing specific tasks or implementing specific abstract data types. It is noted that, delineation of a first, a second, and so on for a certain module or device does not necessarily suggest that different and separate modules are used for such. Instead, the delineation may be only functional, and the functions of several modules or devices may be performed by a single combined module or device.

The present disclosure may also be implemented in a distributed computing environment. In the distributed computing environment, a task is executed by remote processing devices which are connected through a communication network. In distributed computing environment, the program module may be located in storage media (including storage devices) of local and remote computers.

One of the core concepts illustrated in the exemplary embodiments of the present disclosure setting up a unified message receiving end to include a primary instant messaging account and multiple auxiliary instant messaging accounts associated with the primary instant messaging account, and sending the message to a target account selected among the primary instant messaging account and the auxiliary instant messaging accounts. The instant messaging system selects a suitable target account from the primary instant messaging account and the auxiliary instant messaging accounts based on different messaging situations, and send the message to the selected target account to complete the message transmission from the message sending end to the message receiving end.

In a sense, while the primary instant messaging account is the face of the corresponding message receiving end, the actual message receiving task is shared by the auxiliary instant messaging accounts associated with the primary messaging account. This avoids or alleviates a situation where a certain individual account (e.g., the primary instant messaging account in the example) is overburdened by an excessive amount of messaging traffic. At the same time the disclosed method maintains a single "face" of the message receiving end to simplify the user interface. For example, if the primary messaging account is a customer service account of a company, the messages directed to the primary instant messaging account may be distributed and shared among multiple auxiliary instant messaging accounts associated with the primary messaging accounts. These auxiliary instant messaging accounts may be accessed and handled by authorized individuals who are either employees of the company or individuals outside of company authorized through contract.

The auxiliary instant messaging accounts may either be subaccounts created under the primary instant messaging account or accounts generated separately but subsequently associated with the primary instant messaging account for the message sharing purpose described herein. Such account association may be done in a variety of ways by giving a certain characteristic property to each account. For example, the auxiliary instant messaging accounts may be associated with the primary instant messaging account in groups, each group given similar preference parameters.

In one embodiment, the disclosed instant messaging method configures the message receiving end to include a primary instant messaging account and multiple auxiliary instant messaging accounts associated with the primary instant messaging account. The method selects a preferred target account from the primary account and the associated auxiliary accounts for receiving the message. The preferred target account satisfies a precedent-messaging condition and, such as having been most recently contacted by the same message sending end according to a message delivery history. The preferred target account may additionally or alternatively has a current online presence.

It is noted that the preferred target account may be required to satisfy a precedent-messaging condition but not required to have a current online presence. Alternatively, the preferred target account may be required to have a current online presence but not required to satisfy a precedent-messaging condition. Alternatively, the preferred target account may be required to both have a current online presence and satisfy a precedent-messaging condition.

The method also determines a backup target account according to a preset rule if no preferred target account is found. An exemplary preset rule for determining a backup target account upon finding no preferred target account is randomly selecting one of the auxiliary instant messaging accounts to be the target account. Another exemplary preset rule for determining a backup target account upon finding no preferred target account is selecting a least busy account to be the target account.

In one embodiment, the auxiliary instant messaging accounts are associated with the primary instant messaging account in such a way that online presence of one of the auxiliary instant messaging accounts is deemed to give online presence to the primary instant messaging account.

Further embodiments are described below. In this description, the order in which a process is described is not intended to be construed as a limitation, and any number of the described process blocks may be combined in any order to implement the method, or an alternate method.

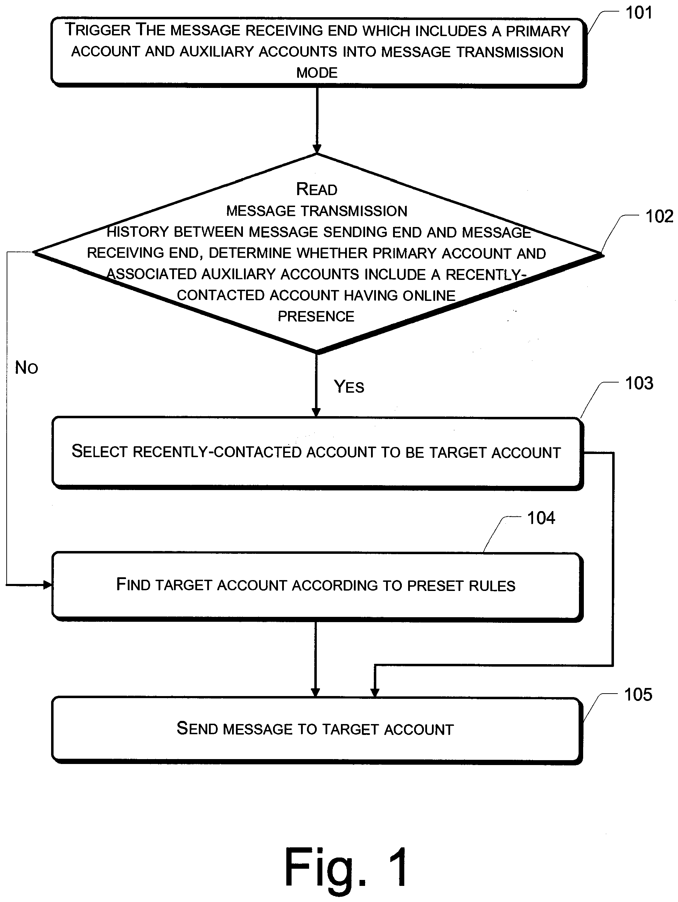

FIG. 1 shows a flow chart of a first exemplary method for transmitting an instant message in accordance with the present disclosure. In this figure, the message is sent from a messaging sending end to a message receiving end. The message sending end may include one or more instant messaging accounts. The message receiving end has a primary instant messaging account and multiple auxiliary instant messaging accounts associated with the primary instant messaging account. The method is carried out using an instant messaging system described herein. The exemplary embodiment of the method may include a procedure described as follows.

Block 101 triggers the message receiving end which includes the primary instant messaging account and the auxiliary instant messaging accounts into a message transmission mode. The message receiving end may be triggered into a message transmission mode by triggering the primary account and/or at least one of the associated auxiliary accounts into a transmission mode. The triggering of the message receiving end may be done through a user interface interacting with a user at the messaging sending end. For example, a presence indicator of the primary instant messaging account and/or at least one of the auxiliary instant messaging accounts may be activated by the user at the message sending end. The presence indicator may be an interactive button on a webpage and can be activated by a mouse click, for instance.

Block 102 reads a message delivery history between the message sending end and the message receiving end, determines whether the primary instant messaging account and the auxiliary instant messaging accounts include a preferred account that has been recently contacted and/or has online presence. If yes, the process continues to Block 103. Otherwise, the process proceeds to Block 104.

Block 103 selects the above preferred account to be a target account and the process proceeds to Block 105.

In one exemplary embodiment, the precedent-messaging condition for a target account is that the account has been recently contacted by the same message sending end (e.g., the same instant messaging account from which the message is being sent). This exemplary precedent-messaging condition ensures continuity of the conversation between the message sending end (e.g., a customer) and the particular instant messaging account (e.g., a representative of the company of the primary instant messaging account). This is beneficial in a context where the continuity of the conversation between two particular parties is important. For example, suppose a certain customer has previously contacted a company at the message receiving end to resolve a product issue and started a conversation with a certain individual using a particular instant messaging account at the message receiving end. Under such circumstance, it is usually better for the customer to speak to the same individual or a person accessing the same instant messaging account when contacting the company again.

Block 104 finds a target account according to a preset rule and the process continues to Block 105 upon finding no preferred account. The process comes to block 104 when a preferred account (e.g., a recently-contacted account having online presence) is not found among the primary instant messaging account and the associated auxiliary instant messaging accounts at the message receiving end. In this case, a preferred account as described in blocks 102 and 103 does not exist to be used as a target account, but a secondary (or backup) target account may still be selected among the primary instant messaging account and the associated auxiliary instant messaging accounts according to a preset rule. Any suitable preset rule, such as a random selection, can be used.

Block 105 sends the message to the target account selected above.

In practice, the primary instant messaging account and the auxiliary instant messaging accounts may each be an account used for logging in IM. In one embodiment, the auxiliary instant messaging accounts are subaccounts created from the primary instant messaging account. However, the auxiliary instant messaging accounts may also be separately created accounts subsequently associated with the primary instant messaging account. The primary instant messaging account and the auxiliary messaging accounts can be associated based on characteristic properties ascribed to the accounts. For example, the auxiliary instant messaging accounts may be associated with the primary instant messaging account in groups, and the characteristic properties may include grouping information to describe the group relationships of the auxiliary. Within the same primary instant messaging account, there may be multiple layers of auxiliary instant messaging accounts. Multiple primary instant messaging accounts representing various types of services may belong to the same company and listed together in parallel to each other. Each primary instant messaging account may have its own set of associated auxiliary instant messaging accounts. An auxiliary instant messaging account may be associated with one or more primary instant messaging accounts.

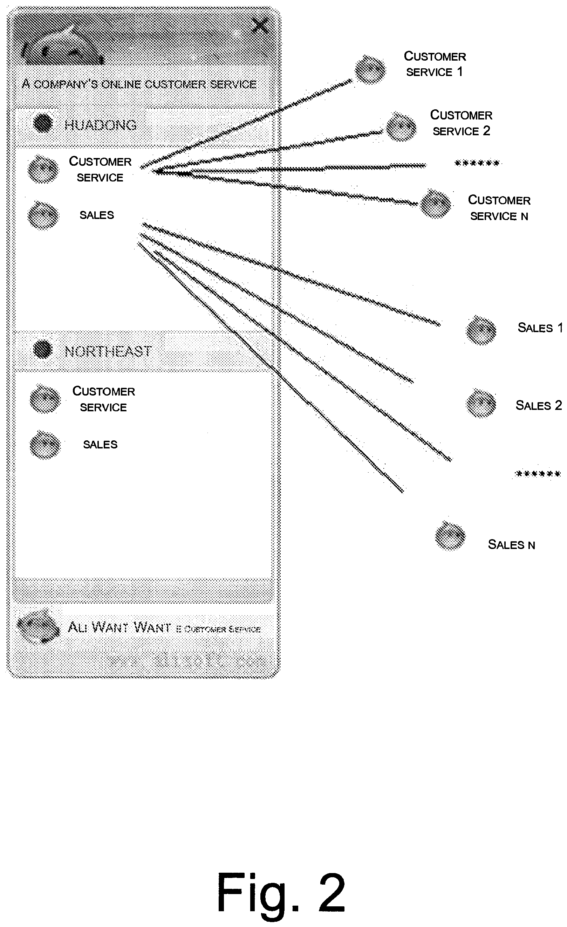

FIG. 2 shows a schematic diagram of a grouping interface of instant messaging accounts belonging to the same message receiving end. In this figure, "customer service" and "sales" each represent a primary instant messaging account belonging to the same company, while "customer service 1", "customer service 2", ..., "customer service N" are corresponding auxiliary accounts associated with the primary account "customer service", and "sales 1", "sales 2", ..., "sales N" are corresponding auxiliary accounts associated with the primary account "sales". Without the auxiliary accounts, when customers contact the company's customer service, for example, all messages are directed to the primary account "customer service", potentially resulting in excessive messaging traffic to the single account. On the other hand, if many independent customer service accounts were used, a potential confusion would arise in the user interface, as the customer might have difficulties to decide which customer service to contact. The use of the associated auxiliary accounts "customer service 1", "customer service 2" etc. helps to solve this problem.

In order to achieve optimization of message assignment, the primary instant messaging account may set up a script (javascript, for example) for message assignment in an associated web page, and display the primary instant messaging account's IM icon or presence indicator on the web page. After a customer has clicked on the primary instant messaging account's IM icon or used other methods to trigger the message transmission mode of the primary instant messaging account at the messaging receiving end, the system may send the message to a certain target account selected from the primary instant messaging account and its multiple associated auxiliary instant messaging accounts according to the script.

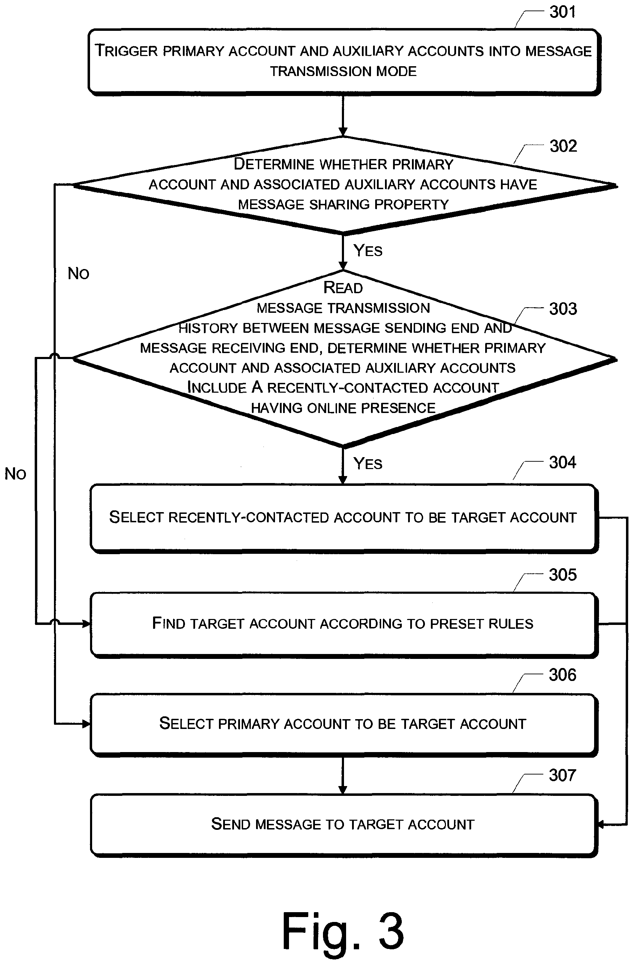

FIG. 3 shows a flow chart of a second exemplary method for transmitting an instant message in accordance with the present disclosure. In the figure, the message is sent from a messaging sending end to a message receiving end. The message receiving end has a primary instant messaging account and multiple auxiliary instant messaging accounts associated therewith. The exemplary embodiment of the method is described as follows.

Block 301 triggers the message receiving end which includes the primary instant messaging account and the auxiliary instant messaging account into a message transmission mode.

Block 302 determines whether the primary instant messaging account and at least one auxiliary instant messaging account have a message sharing property. If yes, the process continues to Block 303. Otherwise, the process proceeds to Block 306.

Block 303 reads message delivery history between the message sending end and the message receiving end, and determines whether the primary instant messaging account and the auxiliary instant messaging accounts include an account that has been recently contacted and has online presence. If yes, the process continues to Block 304. Otherwise, the process proceeds to Block 305.

Block 304 sets the recently-contacted account to be a target account for receiving the message, and the process proceeds to Block 307.

Block 305 finds an alternative target account according to a preset rule, and the process proceeds to Block 307.

Block 306 selects the primary instant messaging account to be the target account and the process continues to Block 307. The process comes to block 306 when the primary instant messaging account does not share messages with any of the auxiliary instant messaging account. In this situation, the message is sent to the primary account and not sent to any of the auxiliary instant messaging account. This procedure is added as a safeguard for authorization to share messages.

Block 307 sends the message to the target account selected in the previous procedures.

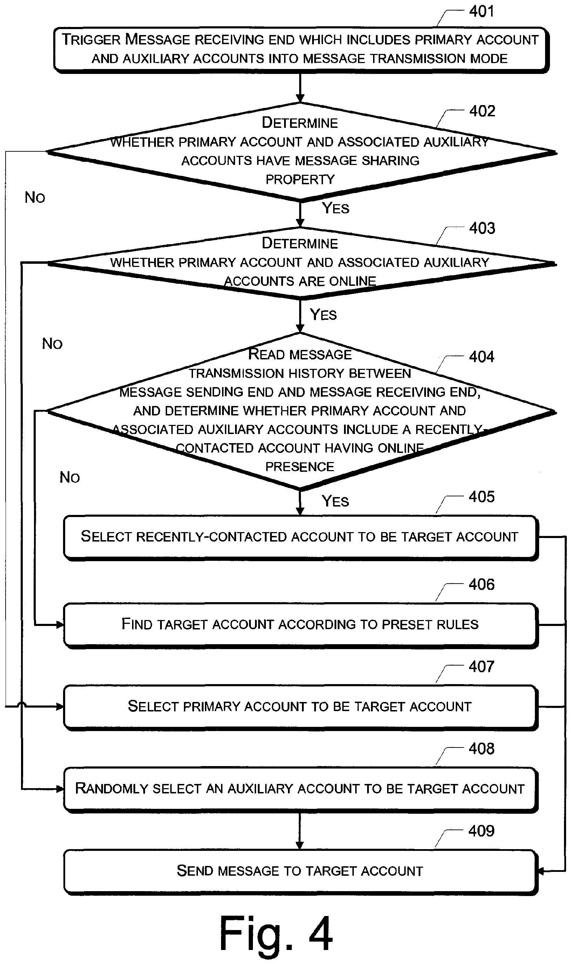

FIG. 4 shows a flow chart of a third exemplary method for transmitting an instant message in accordance with the present disclosure. In this figure, the message is sent from a messaging sending end to a message receiving end. The message receiving end has a primary instant messaging account and auxiliary instant messaging accounts associated with the primary instant messaging account.

Block 401 triggers the message receiving end which includes primary instant messaging account and the auxiliary instant messaging account into a message transmission mode.

Block 402 determines whether the primary instant messaging account and the auxiliary instant messaging accounts have a message sharing property. If yes, the process continues to Block 403. Otherwise, the process proceeds to Block 407.

Block 403 determines whether at least one of the auxiliary instant messaging accounts is online. If yes, the process continues to block 404. Otherwise, the process proceeds to block 408.

Block 404 reads message delivery history between the message sending end and the message receiving end, and determines whether the primary instant messaging account and the auxiliary instant messaging accounts include a preferred account that has been recently contacted and/or has online presence. If yes, the process continues to block 405. Otherwise, the process proceeds to block 406.

Block 405 selects the above preferred account (e.g., recently-contacted) to be the target account and the process proceeds to block 409.

Block 406 finds a target account according to a preset rule and the process proceeds to block 409.

Block 407 selects the primary instant messaging account to be the target account and the process proceeds to Block 409.

Block 408 randomly selects one of the auxiliary accounts to be the target account, and the process continues to Block 409.

Block 409 sends the message to the target account.

In the above exemplary embodiments, the preset rule for finding a target account upon finding no preferred account to be the target account can be any rule that is suitable for reasonably distributing the message under the circumstance. One preferred example of the preset rule is selecting a least busy account to be the target account. For example, if no recently-contacted account having online presence is found, the benefit of keeping the continuity of an existing conversation may not be present in the circumstance. It is therefore reasonable to choose a least busy account among the auxiliary accounts to deliver the message. In this description, a least busy account may be defined as account that has received the fewest number of messages from the message sending end (or all message sending ends) during a recent appearance time. Alternatively, the preset rule may require that the message be sent to an auxiliary account which currently has online presence. If multiple auxiliary accounts have online presence, a random selection can be made among these auxiliary accounts to deliver the message.

A person of ordinary technical knowledge in the art may use any other suitable method to find the target account. For example, one may find an account which has not received a message recently and is not set to block any message, and select the such an account to be the target account. The present disclosure does not intend to impose any limitation on this matter.

In this disclosure, the exemplary embodiments are described in a progressive manner. Any missing details in one exemplary embodiment can be found in related description of the foregoing parts.

The above-described method is described in further details below using a specific example that practices the exemplary embodiments of this disclosure.

In an online business's instant messaging system, assume the message sending end to be a buyer B, and the message receiving end S' include instant messaging accounts S, Sn and Snn. S is the primary instant messaging account of a seller. Sn (including S1, S2, ...) are first-level auxiliary accounts associated with S, while Snn (including S11, S12, S21, S22, ...) are second-level subaccounts associated with Sn. The buyer B may communicate with S' through an instant messaging tool. The buyer B obtains the online status of S' on a web page supporting the e-commerce of the seller. Because the message receiving end S' of the seller has multiple instant messaging accounts, its online presence status shown may be determined according to a certain rule. An exemplary rule for displaying the online status of S' is as follows. As long as any one of the first-level auxiliary account has online presence, the primary account is deemed to have online presence, and accordingly the presence indicator of the primary account is displayed to show an online presence. Likewise, as long as any one of the second-level auxiliary account has online presence, the corresponding first-level auxiliary account is deemed to have online presence, and the presence indicator of the corresponding first-level auxiliary account, if displayed, is displayed to show an online presence.

In the following, assume the presence indicator of the primary account S is displayed. If the buyer B clicks on the presence indicator of S on the web page, a script on the web page is triggered to send a request to an IM assignment server, which may then perform the message account assignment. The procedure is described as follows.

Step 1: determine whether the buyer B is set up by the primary instant messaging account S to have message sharing with its auxiliary instant messaging accounts. If yes, the process continues to step 2. Otherwise, the process proceeds to step 6.

Step 2: obtain online status of S and S1, S2, ...,Sn. If at least one of S1, S2, ...,Sn is online, the process continues to step 3. Otherwise, the process proceeds to step 7.

Step 3: read message delivery history between the buyer B and the seller (the message receiving end including instant messaging accounts S and S1, S2, ...,Sn), and determine whether a recently-contacted account exists among S and S1, S2, ..., Sn. If yes, the process continues to step 4. Otherwise, the process proceeds to step 5.

Step 4: send the message to the recently-contacted account. Alternatively, the recent-contacted account may also be required to have a current online presence.

Step 5: find a least busy account which is not set to block any message from the buyer B, and send the message to the least busy account.

Step 6: send the message to S.

Step 7: upon finding no recently-contact account, randomly select a first level auxiliary account among S1, S2, ..., Sn and send the message to the selected first level auxiliary account.

It is noted that if a presence status of a first level auxiliary account is displayed to be clicked by a buyer, the displayed first level auxiliary account may be seen as a primary account in relation to the second-level auxiliary accounts associated therewith, and a similar procedure may be used to select a target account among this first level auxiliary account and its associated second-level auxiliary accounts.

One exemplary application of the present method is for processing complicated messages for a seller who has a large volume of transactions in instant messaging provided by an online transaction platform. The method allows the seller to employ any desirable number of auxiliary instant messaging accounts associated with the seller's primary instant messaging account to achieve even distribution of resources and workload. The auxiliary instant messaging accounts may be handled by appointed employees of the seller's company or authorized third-party contractors.

In order to simplify the description, the foregoing exemplary embodiments are described in a series of actions. However, it is appreciated that the order in which these actions are described is not intended to be construed as a limitation to the disclosed method. Certain blocks may be combined in different orders or processed concurrently. Moreover, some steps described in the exemplary embodiments may be omitted.

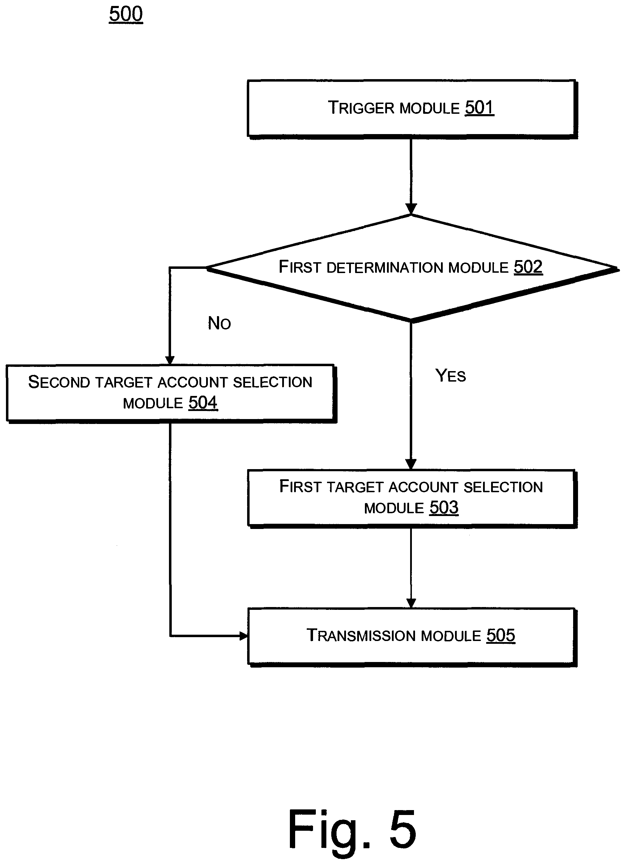

FIG. 5 shows a diagram of a first exemplary system for transmitting an instant message in accordance with the present disclosure. In this figure, the message is sent from a messaging sending end to a message receiving end. The message receiving end has a primary instant messaging account and auxiliary instant messaging accounts associated with the primary instant messaging account. The exemplary instant messaging system 500 may include trigger module 501, first determination module 502, first target account selection module 503, second target account selection module 504, and transmission module 505.

The trigger module 501 is used for triggering the primary instant messaging account or its associated auxiliary accounts into a message transmission mode. The first determination module 502 is used for reading message delivery history between the message sending end and the message receiving end, and determining whether the primary instant messaging account and auxiliary instant messaging accounts include a preferred account that has been recently contacted and/or has online presence. The first determination module 502 is also used for triggering the first target account selection module 503 if the result of the above determination is affirmative, or triggering a second target account selection module 504 if the result of the above determination is negative.

The first target account selection module 503 is used for selecting the above preferred account to be a target account. The second target account selection module 504 is used for finding a target account according to a preset rule if a preferred account is not found. The transmission module 505 is used for transmitting the message to the target account.

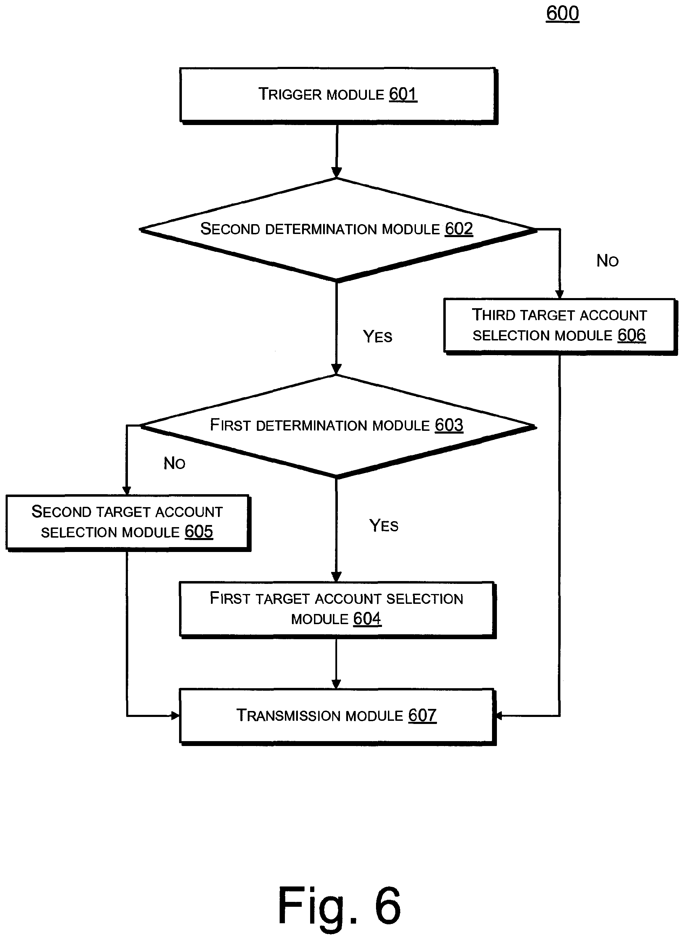

FIG. 6 shows a diagram of a second exemplary system for transmitting an instant message in accordance with the present disclosure. In this figure, the message is sent from a messaging sending end to a message receiving end. The message receiving end has a primary instant messaging account and auxiliary instant messaging accounts associated with the primary instant messaging account. The exemplary instant messaging system 600 includes trigger module 601, second determination module 602, first determination module 603, first target account selection module 604, second target account selection module 605, third target account selection module 606, and transmission module 607.

The trigger module 601 is used for triggering the primary instant messaging account or the associated auxiliary instant messaging accounts into a message transmission mode. The second determination module 602 is used for determining whether the primary instant messaging account and the auxiliary instant messaging accounts have a message sharing property, and triggering the first determination module 603 if yes, or triggering a third target account selection module 606 otherwise.

The first determination module 603 is used for reading message delivery history between the message sending end and the message receiving end, determining whether the primary instant messaging account and auxiliary instant messaging accounts include a preferred account that has been recently contacted and/or has online presence, and triggering the first target account selection module 604 if yes, or triggering the second target account selection module 605 otherwise.

The first target account selection module 604 is used for selecting the above preferred account to be a target account. The second target account selection module 605 is used for finding an alternative target account according to a preset rule if a preferred account is not found. The third target account selection module 606 is used for selecting the primary instant messaging account to be the target account if no auxiliary account is assigned to share messages with the primary account. The transmission module 607 is used for transmitting the message to the target account selected in the above process.

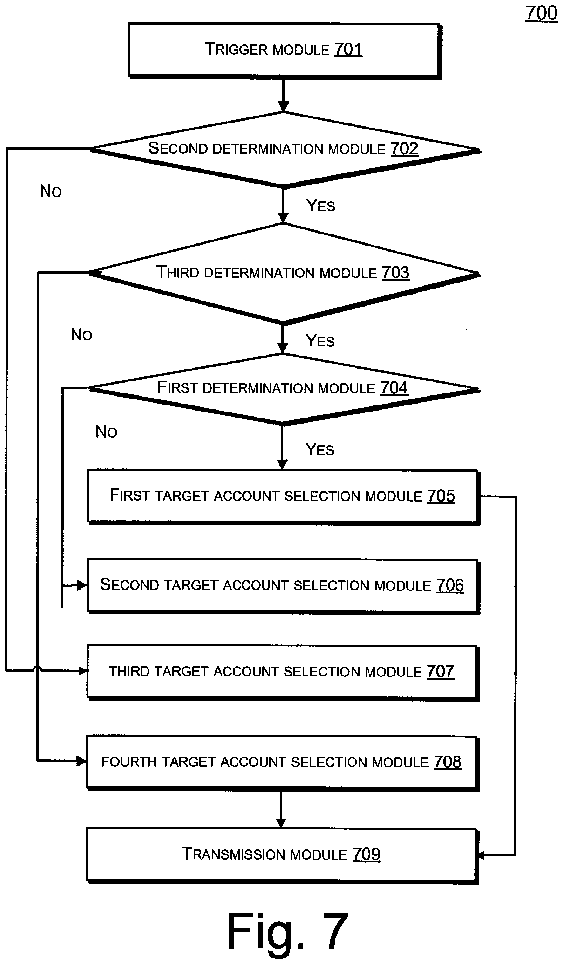

FIG. 7 shows a diagram of a third exemplary system for transmitting an instant message in accordance with the present disclosure. In this figure, the message is sent from a messaging sending end to a message receiving end. The message receiving end has a primary instant messaging account and auxiliary instant messaging accounts associated with the primary instant messaging account. The exemplary instant messaging system 700 includes trigger module 701, second determination module 702, third determination module 703, first determination module 704, first target account selection module 705, second target account selection module 706, third target account selection module 707, fourth target account selection module 708, and transmission module 709.

The trigger module 701 is used for triggering the primary instant messaging account or at least one of the auxiliary instant messaging accounts into a message transmission mode. The second determination module 702 is used for determining whether the primary instant messaging account and the auxiliary instant messaging account have a message sharing property, and triggering the first determination module 703 if yes, or triggering the third target account selection module 707 otherwise.

The third determination module 703 is used for determining whether the primary instant messaging account and/or at least one of the auxiliary instant messaging accounts are online, and triggering the first determination module 704 if yes, or triggering the fourth target account selection module 708 otherwise.

The first determination module 704 is used for reading a message delivery history between the message sending end and the message receiving end, determining whether the primary instant messaging account and auxiliary instant messaging accounts include a preferred account that has been recently contacted and/or has online presence, and triggering the first target account selection module 705 if yes, or triggering the second target account selection module 706 otherwise.

The first target account selection module 705 is used for selecting the above preferred account to be a target account. The second target account selection module 706 is used for finding an alternative target account according to a preset rule if a preferred account is not found. The third target account selection module 707 is used for selecting the primary instant messaging account to be the target account when no auxiliary account is sharing the messages with the primary account. The fourth target account selection module 708 is used for randomly selecting one of the auxiliary accounts to be the target account when no auxiliary account has online presence. The transmission module 709 is used for transmitting the message to the target account selected in the above process.

In the above exemplary embodiments of the instant messaging system, the auxiliary primary instant messaging account and its associated auxiliary instant messaging accounts may be characterized by certain properties such as grouping information to describe the association relationships of the accounts.
In one embodiment, the second target account selection module finds a least busy account to be the target account. The message receiving end may use a web page showing an online presence indicator of the related instant messaging accounts (the primary instant messaging account and/or the associated auxiliary instant messaging accounts).

Because the exemplary systems shown in FIG. 5, FIG. 6 and FIG. 7 can be used for incorporating the exemplary methods described herein, the descriptions of these exemplary systems simplified and details can be found in the descriptions of related parts of the instant messaging method.

It should be pointed out that any sequential terms such as "first" and "second" in this document are only meant to distinguish one entity from another entity or one operation from another operation, but do not necessarily request or imply an existence of a fixed physical order between these entities or operations.

The disclosed method and the system optimize resource allocation by allowing a message to be selectively sent to a target account among the primary account and its associated auxiliary accounts. Compared with existing technologies, the present disclosure may have several potential advantages. Setting up a primary instant messaging account and auxiliary instant messaging account in the message receiving end allows selecting a suitable target account from the primary instant messaging account and the auxiliary instant messaging accounts based on different instant messaging circumstances. This avoids the situation where a single instant messaging account has too much messaging traffic to be handled by its owner and its system. At the same time, not all accounts involved at the message receiving end need to be presented in the user interface to the user sending a message. Instead, the primary account and the associated auxiliary accounts may be presented as a unified message receiving end to the user sending a message to simplify the user interface. It is appreciated that the potential benefits and advantages discussed herein are not to be construed as a limitation or restriction to the scope of the appended claims.

A method and an apparatus for transmitting an instant message provided by this disclosure have been described in details above. Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method for transmitting an instant message, the method comprising the steps of:
configuring a message receiving end by associating a plurality of auxiliary instant messaging accounts with a primary instant messaging account;
requesting the message receiving end to receive a message from a message sending end;
selecting a preferred target account from the primary instant messaging account and the plurality of auxiliary instant messaging accounts for receiving the message, wherein the preferred target account satisfies a precedent-messaging condition and/or has a current online presence according to a message delivery history, **characterized in that** the precedent-messaging condition requires that the preferred target account comprises the account most recently contacted by the sending end;
determining (302; 402) whether the primary instant messaging account and at least one of the auxiliary instant messaging accounts are set to share messages,
selecting (306; 407), in response to a determination that the primary instant messaging account and at least one of the auxiliary instant messaging accounts are not set to share messages (302: NO; 402: NO), the primary instant messaging account to be the preferred target account; and
transmitting (307; 409) the message to the preferred target account,
wherein the auxiliary instant messaging accounts are associated with the primary instant messaging account in groups.

2. The method as recited in claim 1, wherein the plurality of auxiliary instant messaging accounts are associated with the primary instant messaging account in such a way that online presence of one of the auxiliary instant messaging accounts is deemed to give online presence to the primary instant messaging account, at least some of the auxiliary instant messaging accounts are subaccounts of the primary instant messaging account.

3. The method as recited in claim 1, further comprising the steps of:
determining a backup target account according to a preset rule if no preferred target account is found among the primary instant messaging account and the plurality of auxiliary instant messaging accounts; and
transmitting the message to the backup target account,
wherein the preset rule for determining the backup target account upon finding no preferred target account comprises:
randomly selecting (408) one of the auxiliary instant messaging accounts to be the backup target account, or
selecting a least busy account among the primary instant messaging account and the plurality of auxiliary instant messaging accounts to be the backup target account.

4. The method as recited in claim 1, wherein requesting the message receiving end to receive the message comprises:
triggering (401) the primary instant messaging account and/or at least one of the auxiliary instant messaging accounts into a message transmission mode.

5. The method as recited in claim 1, wherein requesting the message receiving end to receive the message comprises:
activating a presence indicator of the primary instant messaging account and/or at least one of the auxiliary instant messaging accounts.

6. An instant messaging system adapted for sending a message from a message sending end to a message receiving end which has a primary instant messaging account and a plurality of auxiliary instant messaging accounts associated therewith, the system comprising:
a trigger module (501; 601; 701) used for triggering the message receiving end into a message transmission mode;
a first determination module (502; 603; 701) for reading a message delivery history between the message sending end and the message receiving end, determining based on the message delivery history whether the primary instant messaging account and the auxiliary instant messaging accounts include a recently-contacted account having a current online presence, and initiating a first target account selection module (503; 604; 705) if such an account is found;
the first target account selection module (503; 604; 705) for selecting the said recently-contacted account to be a target account for receiving the message; and
a transmission module (505; 607; 709) used for transmitting the message to the target account;
**characterized by**
a second determination module (602; 702) used for determining whether the primary instant messaging account and at least one of the auxiliary instant messaging accounts have a message sharing property, and initiating the first determination module (502; 603; 704) if affirmative, or initiating a third target account selection module (606; 707) if negative; and
the third target account selection module (606; 707) for selecting the primary instant messaging account to be the target account,
wherein the auxiliary instant messaging accounts are associated with the primary instant messaging account in groups.

7. The instant messaging system as recited in claim 6, further comprising a second target account selection module (504; 605; 706) used for finding a backup target account according to a preset rule, wherein the first determination module (502; 603; 704) initiates the second target account selection module (504; 605; 706) if the said recently-contacted account is not found.

8. The instant messaging system as recited in claim 6, further comprising:
a third determination module (703) for determining whether the primary instant messaging account and/or at least one of the auxiliary instant messaging accounts is online, and initiating the first determination module (704) if affirmative, or initiating a fourth target account selection module (708) if negative; and
the fourth target account selection module (708) for randomly selecting one of the auxiliary instant messaging accounts to be the target account.

9. The instant messaging system as recited in any of claims 6 to 8, the system being adapted for rendering a web page showing an online presence indicator of the primary instant messaging account.

## Patentansprüche

1. Verfahren zum Übertragen einer Sofortnachricht, wobei das Verfahren die Schritte umfasst:
Konfigurieren eines Nachrichtenempfangsendes durch Assoziieren einer Mehrzahl von Hilfs-Sofortnachrichtenübermittlungskonten mit einem primären Sofortnachrichtenübermittlungskonto;
Auffordern des Nachrichtenempfangsendes, eine Nachricht von einem Nachrichtensendeende zu empfangen;
Auswählen eines bevorzugten Zielkontos zum Empfangen der Nachricht aus dem primären Sofortnachrichtenübermittlungskonto und der Mehrzahl von Hilfs-Nachrichtenübermittlungskonten, wobei das bevorzugte Zielkonto eine Bedingung bezüglich vorheriger Nachrichtenübermittlung erfüllt und/oder gemäß einer Nachrichtenzustellungshistorie eine aktuelle Online-Präsenz hat, **dadurch gekennzeichnet, dass** die Bedingung bezüglich vorheriger Nachrichtenübermittlung verlangt, dass das bevorzugte Zielkonto das zuletzt von dem Sendeende kontaktierte Konto umfasst;
Bestimmen (302; 402), ob das primäre Sofortnachrichtenübermittlungskonto und wenigstens eines der Hilfs-Sofortnachrichtenübermittlungskonten eingerichtet sind, Nachrichten zu teilen (Original: to share messages),
Auswählen (306; 407), in Erwiderung einer Bestimmung, dass das primäre Sofortnachrichtenübermittlungskonto und wenigstens eines der Hilfs-Sofortnachrichtenübermittlungskonten nicht eingerichtet sind, Nachrichten zu teilen (302: NEIN; 402: NEIN), des primären Sofortnachrichtenübermittlungskontos als das bevorzugte Zielkonto; und
Übertragen (307; 409) der Nachricht zu dem bevorzugten Zielkonto,
wobei die Hilfs-Sofortnachrichtenübermittlungskonten mit dem primären Sofortnachrichtenübermittlungskonto in Gruppen assoziiert sind.

2. Verfahren nach Anspruch 1, wobei die Mehrzahl der Hilfs-Sofortnachrichtenübermittlungskonten mit dem primären Sofortnachrichtenübermittlungskonto so assoziiert sind, dass angenommen wird, dass Online-Präsenz eines der Hilfs-Sofortnachrichtenübermittlungskonten dem primären Sofortnachrichtenübermittlungskonto Online-Präsenz verleiht, wobei wenigstens einige der Hilfs-Sofortnachrichtenübermittlungskonten Unterkonten des primären Sofortnachrichtenübermittlungskontos sind.

3. Verfahren nach Anspruch 1, weiterhin umfassend die Schritte:
Bestimmen eines Backup-Zielkontos gemäß einer voreingestellten Regel, wenn kein bevorzugtes Zielkonto unter dem primären Sofortnachrichtenübermittlungskonto und der Mehrzahl von Hilfs-Sofortnachrichtenübermittlungskonten gefunden wird; und
Übertragen der Nachricht zu dem Backup-Zielkonto,
wobei die vorbestimmte Regel zum Bestimmen des Backup-Zielkontos, nachdem kein bevorzugtes Zielkonto gefunden wurde, umfasst:
zufälliges Auswählen (408) eines der Hilfs-Sofortnachrichtenübermittlungskonten als das Backup-Zielkonto, oder
Auswählen eines am wenigstens belegten Kontos (Original: least busy account) unter dem primären Sofortnachrichtenübermittlungskonto und der Mehrzahl von Hilfs-Sofortnachrichtenübermittlungskonten als das Backup-Zielkonto.

4. Verfahren nach Anspruch 1, wobei das Auffordern des Nachrichtenempfangsendes, die Nachricht zu empfangen, umfasst:
Auslösen (401) eines Nachrichtenübertragungsmodus bei dem primären Sofortnachrichtenübermittlungskonto und/oder wenigstens einem der Hilfs-Sofortnachrichtenübermittlungskonten.

5. Verfahren nach Anspruch 1, wobei das Auffordern des Nachrichtenempfangsendes, die Nachricht zu empfangen, umfasst:
Aktivieren eines Präsenzindikators des primären Sofortnachrichtenübermittlungskontos und/oder wenigstens eines der Hilfs-Sofortnachrichtenübermittlungskonten.

6. Sofortnachrichtenübermittlungssystem, angepasst zum Senden einer Nachricht von einem Nachrichtensendeende zu einem Nachrichtenempfangsende, welches ein primäres Sofortnachrichtenübermittlungskonto und eine Mehrzahl von damit assoziierten Hilfs-Sofortnachrichtenübermittlungskonten hat, wobei das System umfasst:
ein Auslösemodul (501; 601; 701) zum Auslösen eines Nachrichtenübertragungsmodus bei dem Nachrichtenempfangsende;
ein erstes Bestimmungsmodul (502; 603; 701) zum Lesen einer Nachrichtenzustellungshistorie zwischen dem Nachrichtensendeende und dem Nachrichtenempfangsende, Bestimmen, beruhend auf der Nachrichtenzustellungshistorie, ob das primäre Sofortnachrichtenübermittlungskonto und die Hilfs-Sofortnachrichtenübermittlungskonten ein kürzlich kontaktiertes Konto mit einer aktuellen Online-Präsenz einschließen und Initiieren eines ersten Zielkonto-Auswahlmoduls (503; 604; 705), wenn ein solches Konto gefunden wird;
das erste Zielkonto-Auswahlmodul (503; 604; 705) zum Auswählen des genannten kürzlich kontaktierten Kontos als ein Zielkonto zum Empfangen der Nachricht; und
ein Übertragungsmodul (505; 607; 709), benutzt zum Übertragen der Nachricht zu dem Zielkonto;
**gekennzeichnet durch**
ein zweites Bestimmungsmodul (602; 702), benutzt zum Bestimmen, ob das primäre Sofortnachrichtenübermittlungskonto und wenigstens eines der Hilfs-Sofortnachrichtenübermittlungskonten eine Nachrichtenteilungseigenschaft (Original: message sharing property) haben, und zum Initiieren des ersten Bestimmungsmoduls (502; 603; 704), wenn bejahend, oder Initiieren eines dritten Zielkonto-Auswahlmoduls (606; 707), wenn verneinend; und
das dritte Zielkonto-Auswahlmodul (606; 707) zum Auswählen des primären Sofortnachrichtenübermittlungskontos als das Zielkonto,
wobei die Hilfs-Sofortnachrichtenübermittlungskonten mit dem primären Sofortnachrichtenübermittlungskonto in Gruppen assoziiert sind.

7. Sofortnachrichtenübermittlungssystem nach Anspruch 6, weiterhin umfassend ein zweites Zielkonto-Auswahlmodul (504; 605; 706), benutzt zum Auffinden eines Backup-Zielkontos gemäß einer voreingestellten Regel, wobei das erste Bestimmungsmodul (502; 603; 704) das zweite Zielkonto-Auswahlmodul (504; 605; 706) initiiert, wenn das kürzlich kontaktierte Konto nicht gefunden wird.

8. Sofortnachrichtenübermittlungssystem nach Anspruch 6, weiterhin umfassend:
ein drittes Bestimmungsmodul (703) zum Bestimmen, ob das primäre Sofortnachrichtenübermittlungskonto und/oder wenigstens eines der Hilfs-Sofortnachrichtenübermittlungskonten online ist und Initiieren des ersten Bestimmungsmodus (704) wenn bejahend, oder Initiieren eines vierten Zielkonto-Auswahlmodus (708), wenn verneinend; und
das vierte Zielkonto-Auswahlmodul (708) zum zufälligen Auswählen eines der Hilfs-Sofortnachrichtenübermittlungskonten als das Zielkonto.

9. Sofortnachrichtenübermittlungssystem nach einem der Ansprüche 6 bis 8, wobei das System zum Aufbereiten (Original: rendering) einer Webseite, die einen Online-Präsenzindikator des primären Sofortnachrichtenübermittlungskontos zeigt, angepasst ist.

## Revendications

1. Procédé de transmission d'un message instantané, le procédé comprenant les étapes suivantes :
configuration d'une extrémité de réception de messages en associant une pluralité de comptes de messagerie instantanée auxiliaires à un compte de messagerie instantanée primaire ;
demande à l'extrémité de réception de messages de recevoir un message provenant d'une extrémité d'envoi de messages ;
sélection d'un compte cible préféré parmi le compte de messagerie instantanée primaire et la pluralité de comptes de messagerie instantanée auxiliaires pour recevoir le message, dans lequel le compte cible préféré répond à une condition de messagerie précédente et/ou a une présence en ligne actuelle conformément à un historique de livraison de messages, **caractérisé en ce que** la condition de messagerie précédente exige que le compte cible préféré comprenne le compte le plus récemment contacté par l'extrémité d'envoi ;
détermination (302 ; 402) du fait que le compte de messagerie instantanée primaire et au moins un des comptes de messagerie instantanée auxiliaires sont ou non configurés pour partager des messages ;
sélection (306 ; 407), en réponse à une détermination du fait que le compte de messagerie instantanée primaire et au moins un des comptes de messagerie instantanée auxiliaires ne sont pas configurés pour partager des messages (302 : NO ; 402 : NO), du compte de messagerie instantanée primaire comme étant le compte cible préféré ; et
transmission (307 ; 409) du message au compte cible préféré,
dans lequel les comptes de messagerie instantanée auxiliaires sont associés au compte de messagerie instantanée primaire en groupes.

2. Procédé selon la revendication 1, dans lequel les comptes de la pluralité de comptes de messagerie instantanée auxiliaires sont associés au compte de messagerie instantanée primaire de telle sorte que la présence en ligne de l'un des comptes de messagerie instantanée auxiliaires est considérée comme conférant une présence en ligne au compte de messagerie instantanée primaire, au moins certains des comptes de messagerie instantanée auxiliaires étant des sous-comptes du compte de messagerie instantanée primaire.

3. Procédé selon la revendication 1, comprenant en outre les étapes suivantes :
détermination d'un compte cible de remplacement conformément à une règle préétablie si aucun compte cible préféré n'est découvert parmi le compte de messagerie instantanée primaire et la pluralité de comptes de messagerie instantanée auxiliaires ; et
transmission du message au compte cible de remplacement,
dans lequel la règle préétablie pour déterminer le compte cible de remplacement lorsqu'aucun compte cible préféré n'est découvert comprend :
la sélection aléatoire (408) d'un des comptes de messagerie instantanée auxiliaires pour qu'il soit le compte cible de remplacement, ou
la sélection d'un compte le moins actif parmi le compte de messagerie instantanée primaire et la pluralité de comptes de messagerie instantanée auxiliaires comme compte cible de remplacement.

4. Procédé selon la revendication 1, dans lequel la demande à l'extrémité de réception de messages de recevoir le message comprend :
le déclenchement (401) du compte de messagerie instantanée primaire et/ou d'au moins un des comptes de messagerie instantanée auxiliaires en mode de transmission de messages.

5. Procédé selon la revendication 1, dans lequel la demande à l'extrémité de réception de messages de recevoir le message comprend :
l'activation d'un indicateur de présence du compte de messagerie instantanée primaire et/ou d'au moins un des comptes de messagerie instantanée auxiliaires.

6. Système de messagerie instantanée adapté pour envoyer un message provenant d'une extrémité d'envoi de messages à une extrémité de réception de messages qui a un compte de messagerie instantanée primaire et une pluralité de comptes de messagerie instantanée auxiliaires qui y sont associés, le système comprenant :
un module de déclenchement (501 ; 601 ; 701) utilisé pour déclencher l'extrémité de réception de messages dans un mode de transmission de messages ;
un premier module de détermination (502 ; 603 ; 701) pour lire un historique de livraison de messages entre l'extrémité d'envoi de messages et l'extrémité de réception de messages, pour déterminer, sur base de l'historique de livraison de messages, si le compte de messagerie instantanée primaire et les comptes de messagerie instantanée auxiliaires comprennent ou non un compte récemment contacté ayant une présence en ligne actuelle, et pour initier un premier module de sélection de compte cible (503 ; 604 ; 705) si un tel compte est découvert ;
le premier module de sélection de compte cible (503 ; 604 ; 705) servant à sélectionner ledit compte récemment contacté comme étant un compte cible pour recevoir le message ; et
un module de transmission (505 ; 607 ; 709) utilisé pour transmettre le message au compte cible ;
**caractérisé par**
un deuxième module de détermination (602 ; 702) utilisé pour déterminer si le compte de messagerie instantanée primaire et au moins un des comptes de messagerie instantanée auxiliaires ont ou non une propriété de partage de messages, et pour initier le premier module de détermination (502 ; 603 ; 704) dans l'affirmative, ou pour initier un troisième module de sélection de compte cible (606 ; 707) dans la négative ; et
le troisième module de sélection de compte cible (606 ; 707) pour sélectionner le compte de messagerie instantanée primaire comme étant le compte cible,
dans lequel les comptes de messagerie instantanée auxiliaires sont associés au compte de messagerie instantanée primaire en groupes.

7. Système de messagerie instantanée selon la revendication 6, comprenant en outre un deuxième module de sélection de compte cible (504 ; 605 ; 706) utilisé pour découvrir un compte cible de remplacement conformément à une règle préétablie, dans lequel le premier module de détermination (502 ; 603 ; 704) initie le deuxième module de sélection de compte cible (504 ; 605 ; 706) si ledit compte récemment contacté n'est pas découvert.

8. Système de messagerie instantanée selon la revendication 6, comprenant en outre :
un troisième module de détermination (703) utilisé pour déterminer si le compte de messagerie instantanée primaire et/ou au moins un des comptes de messagerie instantanée auxiliaires sont ou non en ligne, et pour initier le premier module de détermination (704) dans l'affirmative, ou pour initier un quatrième module de sélection de compte cible (708) dans la négative ; et
le quatrième module de sélection de compte cible (708) pour sélectionner aléatoirement un des comptes de messagerie instantanée auxiliaires comme étant le compte cible.

9. Système de messagerie instantanée selon l'une quelconque des revendications 6 à 8, le système étant adapté pour rendre une page web montrant un indicateur de présence en ligne du compte de messagerie instantanée primaire.
